# FASCICULE DE BREVET EUROPEEN

(11) **EP 0 564 338 B1**
(45) Date de publication et mention de la délivrance du brevet: **01.10.1997**
(21) Numéro de dépôt: 93400791.5
(22) Date de dépôt: 26.03.1993
(51) Int. Cl.: C08L 77/00, C08L 77/02, C08L 77/06

(54) **Composition thermoplastique multiphase à base de résine polyamide contenant un polymère d'éthylène à fonction époxyde**
Mehrphasige thermoplastische Zusammensetzung auf Basis eines Polyamid-Harzes, enthaltend Epoxy-funktionelles Polyethylen
Multiphase thermoplastic composition based on polyamide resin and containing epoxy functional polyethylene

(30) Priorité: 03.04.1992 FR 9204091
(43) Date de publication de la demande: 06.10.1993
(73) Titulaire: ELF ATOCHEM S.A., 92800 Puteaux (FR)
(72) Inventeur: Hert, Marius, F-27470 Serquigny (FR); Perret, Patrice, F-27190 Glisolles (FR)

(56) Documents cités:
- EP-A- 0 040 926
- EP-A- 0 096 264
- EP-A- 0 284 379
- EP-A- 0 327 978

## Description

L'invention a pour objet une composition thermoplastique multiphase ayant une résistance au choc améliorée.

L'invention concerne notamment une composition thermoplastique à base de résine polyamide ayant une résistance au choc amélioré notamment à basse température, contenant au moins un polymère d'éthylène ayant des motifs dérivés d'époxyde insaturés.

L'invention a également pour objet les articles obtenus à partir de ladite composition.

Des compositions à matrice de polyamides et de polymères éthylèniques sont déjà connues pour leur résistance au choc.

En particulier, le brevet EP 096 264 décrit un matériau à haute résistance à l'impact contenant :
(A) un nylon thermoplastique ayant une viscosité relative de 2,5 à 5, et
(B) de 5 à 60 % en poids, par rapport à (A), d'un terpolymère non réticulé constitué de :
   (a) 55 à 79,5 % en poids d'éthylène,
   (b) 20 à 40 % en poids d'au moins un (méth)acrylate d'alkyle primaire ou secondaire, et
   (c) 0,5 à 8 % en poids d'un monomère fonctionnellement acide (par exemple l'anhydride maléique).

Le brevet EP 218 665 décrit des compositions contenant de 50 à 95 % en poids d'au moins une résine polyamide, et de 5 à 50 % en poids d'au moins un polymère d'éthylène contenant de 0,9 à 16 % en mole de motifs dérivés de l'anhydride maléique et/ou d'au moins un acrylate ou méthacrylate d'alkyle dont le groupe alkyle a de 1 à 6 atomes de carbone.

Ledit polymère d'éthylène est présente sous forme d'un mélange de copolymère éthylène/(méth)acrylate d'alkyle (A) et de terpolymère éthylène/anhydride maléïque/(méth)acrylate d'alkyle (B), le rapport pondéral (A)/(B) étant compris entre 1/3 et 3.

On connait également le document EP-A-072.480 qui décritune composition résistante à l'impact comprenant de 50 à 90 % en poids de polyamide, de 1 à 45 % en poids d'une résine ionomère éthylénique et de 0,5 à 40 % en poids d'un copolymère éthylénique élastomérique.

Enfin le brevet US 3 373 223 décrit un alliage polymère essentiellement constitué de 25 à 90 % en poids de polyoléfine, 5 à 70 % en poids de polyamide et 1 à 10 % en poids d'un copolymère éthylène/acide (méth)acrylique.

Cependant, bien que ces compositions présentent une résistance au choc améliorée comparativement à la matrice de polyamide employée seule, cette amélioration reste cependant insuffisante pour de nombreuses applications nécessitant une résistance au choc excellente notamment à base température.

On a maintenant trouvé une composition thermoplastique multiphase à base de résine polyamide, ayant une résistance au choc amélioré notamment à basse température, caractérisée en ce qu'elle comprend
(A) de 50 % à 95 % en poids d'au moins une résine polyamide et
(B) de 5 % à 50 % en poids de :
   (a) 5 % à 100 % en poids d'au moins un terpolymère éthylène/(méth)acrylate d'alkyle/époxyde insaturé (I) et de
   (b) 0 à 95 % en poids d'au moins un polymère choisi dans le groupe constitué par
      - les polyéthylènes,
      - les copolymères éthylène/(méth)acrylate d'alkyle (II),
      - les terpolymères éthylène/(méth)acrylate d'alkyle/anhydride d'acide dicarboxylique insaturé (III).

S'agissant des époxydes insaturés entrant dans le terpolymère (I) on peut citer notamment les esters et les éthers de glycidyle aliphatiques tels que l'acrylate de glycidyle, le méthacrylate de glycidyle, le maléate de glycidyle, l'itaconate de glycidyle, le vinylglycidyléther, l'allylglycidyléther.

Parmi ces époxydes insaturés, on préfère tout particulièrement utiliser l'acrylate de glycidyle et le méthacrylate de glycidyle.

Selon la présente invention le terpolymère (I) comprend de 0,2 % à 5 % en mole d'au moins un motif dérivé d'un époxyde insaturé et de 1 % à 15 % en mole d'au moins un motif dérivé d'un acrylate ou méthacrylate d'alkyle et a un indice de fluidité compris entre 1 et 50 dg/mn, mesuré selon la norme NFT 51-016 (conditions : 190° C/ charge de 2,16 kg).

Le groupement alkyle de l'acrylate ou méthacrylate d'alkyle entrant dans le terpolymère (I) dans les copolymères (II) et dans les terpolymères (III) qui peut être linéaire, ramifié ou cyclique a jusqu'à 10 atomes de carbone.

A titre d'illustration d'acrylate ou de méthacrylate d'alkyle entrant dans le terpolymère, les copolymères (II) et dans les terpolymères (III) on peut citer notamment l'acrylate de méthyle, l'acrylate d'éthyle, l'acrylate de n-butyle, l'acrylate d'isobutyle, l'acrylate d'éthyl-2 hexyle, l'acrylate de cyclohexyle, le méthacrylate de méthyle, le méthacrylate d'éthyle. Parmi ces acrylates et méthacrylates d'alkyle on préfère tout particulièrement l'acrylate d'éthyle, l'acrylate de n-butyle et le méthacrylate de méthyle.

Selon la présente invention les copolymères (II) comprennent de 1 % à 20 % en mole de motifs dérivés d'acrylate ou de méthacrylate d'alkyle et ont un indice de fluidité compris entre 1 et 50 dg/mm mesuré selon la norme NFT 51-016 (conditions 190° C/charge de 2,16 kg).

Selon la présente invention, les terpolymères (III) comprennent de 0,01 % à 5 % et, de préférence, 0,1 % à 2 % en mole d'au moins un motif dérivé d'un anhydride d'acide dicarboxylique insaturé et de 3 % à 20 % en mole d'au moins un motif dérivé d'un acrylate ou méthacrylate d'alkyle et ont un indice de fluidité compris entre 1 et 50 dg/mn mesuré selon la norme NFT 51-016 (conditions : 190° C/charge de 2,16 kg).

A titre d'illustration d'anhydride d'acide dicarboxylique insaturé entrant dès les terpolymères (III) on citera l'anhydride itaconique, l'anhydride citraconique, l'anhydride méthyl-2 maléique, l'anhydride diméthyl-2,3 maléique, l'anhydride bicyclo(2.2.2) oct-5-ène 2,3 dicarboxylique, l'anhydride maléique.

Parmi ces anhydrides d'acide dicarboxylique insaturés, on préfère tout particulièrement utiliser l'anhydride maléique.

Par polyéthylénes, on désigne présentement un polyéthylène haute densité de cristallinité supérieure à 30 %, un polyéthylène basse densité.

On a en effet trouvé que les compositions à matrice polyamide et à composés polyoléfiniques connus jusqu'à présent présentaient une résistance au choc améliorée mais encore insuffisante pour certaines applications.

La demanderesse a trouvé que l'utilisation en tant que polymère d'éthylène de 5 % à 100 % d'un terpolymère éthylène/(méth)acrylate d'alkyle/époxyde insaturé (I) et de 0 % à 95 % d'un polymère choisi dans le groupe constitué par les polyéthylènes, les copolymères (II), les terpolymères (III) permettait d'améliorer la résistance au choc des compositions connues jusqu'à présent, notamment à basse température.

Par résine polyamide on désigne présentement une résine produite par polycondensation d'un ou plusieurs aminoacides tels que les acides aminocaproique amino-7 heptanoique, amino-11 undécanoïque ou de quantités équimolaires d'un acide dicarboxylique saturé contenant de 4 à 12 atomes de carbone avec une diamine, la diamine contenant de 4 à 14 atomes de carbone. On peut utiliser un excès de diamine de manière à obtenir un excès de groupes terminaux amine par rapport aux groupes terminaux carboxyle dans le polyamide.

A titre d'illustration de telles résines on citera :
le polyhexaméthylèneadipamide(polyamide 6-6),
le polyhexaméthylèneazélaamide(polyamide 6-9),
le polyhexaméthylènesébacamide(polyamide 6-10),
le polyhexaméthylènedodécanédiamide(nylon 6-12),
le poly(undécanoamide)(polyamide 11).

Il est possible aussi d'utiliser dans la présente invention des polyamides préparés par polycondensation d'au moins deux des monomères et polymères mentionnés ci-dessus, ce qui conduit à des copolyamides.

Les résines polyamide de la présente invention peuvent également être produites par polymérisation d'un ou plusieurs lactames tels que le caprolactame qui conduit au polyamide 6 ou le lauryllactame qui conduit au polyamide 12.
Ces résines polyamide ont une masse moléculaire d'au moins 5000 et de préférence un point de fusion supérieur ou égal à 180°C.

On peut encore incorporer dans les compositions des stabilisants, des agents de démoulage, des lubrifiants, des accélérateurs de cristallisation, des plastifiants, des pigments, des colorants ou des charges minérales. Selon une variante il est ainsi possible de rigidifier les compositions décrites ci-dessus en y ajoutant une proportion importante de charges minérales, avantageusement jusqu'à 50 parties en poids d'au moins une charge minérale pour 100 parties en poids du total de résine polyamide, de copolymère et de terpolymère. La charge minérale pulvérulente ou à l'état de fibres ou plaquettes peut, par exemple, être choisie parmi les fibres de verre, les billes de verre, le mica, le talc, les argiles, les aluminates et silicates, par exemple de calcium,l'alumine, l'hydrate d'alumine, le noir de carbone, les fibres de carbone ou de bore, l'amiante, les oxyde, hydroxyde, carbonate et sulfate de magnésium ou de calcium, les oxydes de fer, antimoine, zinc, le dioxyde de titane, le sulfate de baryum, la bentonite, la terre de diatomées, le kaolin, la silice telle le quartz, le feldspath.

La composition objet de la présente invention est obtenue de façon connue par toute technique de mélangeage à l'état fondu telle que, par exemple, l'extrusion, le travail sur mélangeur interne.

Un second objet de la présente invention concerne des articles obtenus à partir d'au moins une composition décrite cédemment. Ces articles peuvent être obtenus par toutes méthodes conventionnelles utilisées dans l'industrie des thermoplastiques, notamment des articles moulés par injection, ou obtenus par extrusion (film, tuyaux, plaques, fibres,...)

Les compositions thermoplastiques multiphases obtenues dans le cadre de la présente invention possèdent une résistance au choc améliorée notamment à basse température qui les rendent particulièrement intéressantes pour toute application exigeant cette qualité, notamment dans le secteur des industries automobile et électronique, des appareils à usage domestique ou industriel, des articles de sport.

Les exemples suivants illustrent l'invention.

### EXEMPLE 1 (Comparatif)

On considère une première composition témoin constituée de 80 % en poids d'un polyamide 6 de point de fusion égale à 220°C (déterminé selon la norme ASTM D 789) et de densité égale à 1,13 g/cm³ (déterminé selon la norme ISO R 1183 D) et de 20 % en poids d'un copolymère éthylène/acrylate de n-butyle d'indice de fluidité égal à 2,5 dg/mn (déterminé selon la norme NFT 51-016 selon les conditions : 190° C/charge de 2,16 kg) dont la proportion en poids d'acrylate de butyle est de 28 %.

Le mélange est effectué sur un comalaxeur BUSS PR 46 à une vitesse de vis de 250 tours par minute et à une température matière de 240°C puis granulé.

Les granulés obtenus sont séchés sous pression réduite à une température de 80°C puis sont moulés par injection sur une machine type BILLION 80/50 à une température de 250°C et à pression d'injection de 50 MPa en éprouvettes normalisées (4 X 10 X 80 mm³) pour effectuer la résistance au choc CHARPY selon la norme ISO R 179.

Les éprouvettes sont conditionnées pendant 14 jours à 23°C et 50 % d'humidité relative puis on réalise sur les éprouvettes préalablement entaillées la résistance au choc. Les résistances au choc CHARPY mesurées à différentes températures sont exprimées en kJ/m² et sont reportées dans le tableau ci-après.

### EXEMPLE 2 (comparatif)

On prépare selon les conditions opératoires de l'exemple 1 une composition témoin constituée de :
- 80 % en poids du polyamide 6 utilisé dans l'exemple 1,
- 20 % en poids d'un terpolymère d'indice de fluidité égale à 7 dg/mn (déterminé selon la norme NFT 51-016 selon les conditions/ 190° C/2,16 kg) comprenant 28 % en poids d'acrylate d'éthyle, 1,8 % en poids d'anhydride maléique et 72 % en poids d'éthylène.

La résistance au choc CHARPY est mesurée sur des éprouvettes entaillées préparées selon les conditions décrites dans l'exemple 1.

Les résistances au choc CHARPY obtenues à différentes températures, exprimées en kJ/m², sont reportés dans le tableau ci-après.

### EXEMPLE 3

On prépare selon les conditions opératoires de l'exemple 1 une composition constituée de :
- 80 % en poids du polyamide 6 utilisé dans l'exemple 1,
- 20 % en poids d'un terpolymère d'indice de fluidité égale à 5 dg/mn (norme NFT 51-016/conditions : 190° C/2,16 kg) comprenant 25 % en poids d'acrylate d'éthyle, 8 % en poids de méthacrylate de glycidyle et 67 % en poids d'éthylène.

La résistance au choc CHARPY est mesurée sur des éprouvettes entaillées préparées selon les conditions décrites dans l'exemple 1.

Les résistances au choc CHARPY obtenues à différentes températures, exprimées en kJ/m² sont reportés dans le tableau ci-après.

### EXEMPLE 4

On prépare un mélange M1 constitué de 10 % en poids du terpolymère de l'exemple 3 et de 90 % en poids du copolymère de l'exemple 1 par mélangeage sur comalaxeur BUSS PR 46 à une vitesse de vis de 250 tours par minute et à une température matière de 120°C.

Le mélange est granulé.

On prépare ensuite selon les conditions opératoires de l'exemple 1 une composition constituée de :
- 80 % en poids du polyamide 6 utilisée dans l'exemple 1,
- 20 % en poids du mélange M1 précédemment préparé.

La résistance au choc CHARPY est mesurée sur des éprouvettes entaillées préparées selon les conditions décrites dans l'exemple 1.

Les résistances au choc CHARPY obtenues à différentes températures, exprimées en kJ/m², sont reportés dans le tableau ci-après.

### EXEMPLE 5

On prépare selon les conditions de l'exemple 4 un mélange M2 constitué de 30 % en poids du copolymère de l'exemple 1 et 70 % en poids du terpolymère de l'exemple 3.

On prépare ensuite selon les conditions opératoires de l'exemple 1 une composition constituée de :
- 80 % en poids du polyamide 6 utilisée dans l'exemple 1,
- 20 % en poids du mélange M2 précédemment préparé.

La résistance au choc CHARPY est mesurée sur des éprouvettes entaillées préparées selon les conditions décrites dans l'exemple 1.

Les résistances au choc CHARPY obtenues à différentes températures, exprimées en kJ/m², sont reportés dans le tableau ci-après.

### EXEMPLE 6

On prépare à sec au tonneau un mélange M3 constitué de :
- 40 % en poids du terpolymère de l'exemple 2
- 60 % en poids du terpolymère de l'exemple 3.

On prépare ensuite selon les conditions opératoires de l'exemple 1 une composition constituée de :
- 80 % en poids du polyamide 6 utilisée dans l'exemple 1,
- 20 % en poids du mélange M3 précédemment préparé.

La résistance au choc CHARPY est mesurée sur des éprouvettes entaillées préparées selon les conditions décrites dans l'exemple 1.

Les résistances au choc CHARPY obtenues à différentes températures, exprimées en kJ/m², sont reportés dans le tableau ci-après.

### EXEMPLE 7 (comparatif)

On prépare une composition témoin constitué de 80 % en poids d'un polyamide 6,6 de point de fusion égal à 255° C et de densité égale à 1,13 g/cm³ et de 20 % du copolymère utilisé dans l'exemple 1.

Le mélange est effectué sur un comalaxeur BUSS PR 46 à une vitesse de vis de 250 tours par minute et à une température matière de 270°C puis granulé.

Les granulés obtenus sont séchés sous pression réduite à une température de 80°C puis sont moulés par injection sur une machine à une température de 280°C et à pression d'injection de 50 ± 10 MPa en éprouvettes normalisées (4 X 10 X 80 mm³) pour effectuer la résistance au choc CHARPY selon la norme ISO R 179.

Les éprouvettes sont conditionnées pendant 14 jours à 23°C et 50 % d'humidité relative puis on réalise sur les éprouvettes préalablement entaillées la résistance au choc. Les résistances au choc CHARPY obtenues à différentes températures sont exprimées en kJ/m² et sont reportées dans le tableau ci-après.

### EXEMPLE 8

On prépare selon les conditions opératoires de l'exemple 7 une composition constituée de :
- 80 % en poids du polyamide 6,6 utilisé dans l'exemple 7,
- 20 % en poids du terpolymère de l'exemple 3.

La résistance au choc CHARPY est mesurée sur des éprouvettes entaillées préparées selon les conditions décrites dans l'exemple 1.

Les résistances au choc CHARPY obtenues à différentes températures, exprimées en kJ/m² sont reportés dans le tableau ci-après.

### EXEMPLE 9

On prépare selon les conditions opératoires de l'exemple 7 une composition constituée de :
- 80 % en poids du polyamide-6,6 utilisé dans l'exemple 7,
- 20 % en poids du mélange M1 utilisé dans l'exemple 4.

La résistance au choc CHARPY est mesurée sur des éprouvettes entaillées préparées selon les conditions décrites dans l'exemple 7.

Les résistances au choc CHARPY obtenues à différentes températures, exprimées en kJ/m² sont reportés dans le tableau ci-après.

**TABLEAU**

| Valeurs obtenues pour la Résistance au choc CHARPY (en kJ/m²) | | | | | | | | | |
|---|---|---|---|---|---|---|---|---|---|
| EXEMPLES TEMPERATURE | 1 | 2 | 3 | 4 | 5 | 6 | 7 | 8 | 9 |
| 20°C | 11 | 28 | 50 | 50 | NC* | NC* | 14 | 40 | 40 |
| -20°C | 8 | 22 | 34 | 40 | 37 | 42 | 10 | 33 | 34 |
| -40°C | 5,5 | 16 | 26 | 36 | 30 | 38 | 8 | 22 | 29 |

| | | | | | | | | | |
|---|---|---|---|---|---|---|---|---|---|
| * NC = non casse | | | | | | | | | |

## Revendications

1. Composition thermoplastique multiphase à base de résine polyamide, caractérisée en ce qu'elle comprend
(A) de 50 % à 95 % en poids d'au moins une résine polyamide et :
(B) de 5 % à 50 % en poids de :
(a) 5 % à 100 % en poids d'au moins un terpolymère éthylène/(méth) acrylate d'alkyle/époxyde insaturé (I) et de
(b) 0 à 95 % en poids d'au moins un polymère choisi dans le groupe constitué par :
- les polyéthylènes,
- les copolymères éthylène/(méth) acrylate d'alkyle (II),
- les terpolymères éthylène/(méth)acrylate d'alkyle/anhydride d'acide dicarboxylique insaturé (III).

2. Composition selon la revendication 1, caractérisée en ce que le terpolymère (I) comprend de 0,2 % à 5 % en mole d'au moins un motif dérivé d'un époxyde insaturé, de 1 % à 15 % en mole d'au moins un motif dérivé d'un acrylate ou méthacrylate d'alkyle et a un indice de fluidité compris entre 1 et 50 dg/mn mesuré selon la norme NFT 51-016 (conditions : 190° C/ charge de 2,16 kg).

3. Composition selon l'une des revendications 1 et 2, caractérisée en ce que l'époxyde insaturé dans le terpolymère (I) est un ester de glycidyle aliphatique.

4. Composition selon la revendication 3, caractérisée en ce que l'ester de glycidyle aliphatique est le méthacrylate de glycidyle.

5. Composition selon l'une des revendications 1 et 2, caractérisée en ce que le groupement alkyle de l'acrylate ou méthacrylate d'alkyle entrant dans le terpolymère (I) est linéaire, ramifié ou cyclique et a jusqu'à 10 atomes de carbone.

6. Composition selon la revendication 5 caractérisée en ce que l'acrylate d'alkyle est l'acrylate d'éthyle.

7. Composition selon la revendication 1, caractérisée en ce que les copolymères (II) comprennent de 1 % à 20 % en mole de motifs dérivés d'acrylate ou de méthacrylate d'alkyle et ont un indice de fluidité compris entre 1 et 50 dg/mn mesuré selon la norme NFT 51-016 (conditions : 190° C/charge de 2,16 kg).

8. Composition selon l'une des revendications 1 et 7, caractérisée en ce que le groupement alkyle de l'acrylate ou méthacrylate d'alkyle entrant dans les copolymères (II) est linéaire, ramifié ou cyclique et a jusqu'à 10 atomes de carbone.

9. Composition selon la revendication 8, caractérisée en ce que l'acrylate d'alkyle est l'acrylate de n-butyle.

10. Composition selon la revendication 1, caractérisée en ce que les terpolymères (III) comprennent de 0,01 % à 5 % en mole de motifs dérivés d'anhydride d'acide dicarboxylique insaturé et de 3 % à 20 % en mole de motifs dérivés d'un acrylate ou méthacrylate d'alkyle et ont un indice de fluidité compris entre 1 et 50 dg/mn mesuré selon la norme NFT-51-016 conditions : 190° C/ charge de 2,16 kg).

11. Composition selon la revendication 10, caractérisée en ce que les terpolymères (III) comprennent de 0,1 % à 2 % en mole de motifs dérivés d'anhydride d'acide dicarboxylique insaturé.

12. Composition selon l'une des revendications 1, 10 et 11, caractérisée en ce que l'anhydride d'acide dicarboxylique insaturé entrant dans les terpolymères (III) est l'anhydride maléique.

13. Composition selon l'une des revendications 1 et 10 caractérisée en ce que le groupement alkyle de l'acrylate ou méthacrylate d'alkyle entrant dans les terpolymères (III) est linéaire, ramifié ou cyclique et a jusqu'à 10 atomes de carbone.

14. Composition selon la revendication 13 caractérisée en ce que l'acrylate d'alkyle est l'acrylate d'éthyle.

15. Articles obtenus à partir d'au moins une composition selon l'une des revendications 1 à 14.

## Claims

1. Multiphase thermoplastic composition based on polyamide resin, characterised in that it comprises
(A) from 50 % to 95 % by weight of at least one polyamide resin and:
(B) from 5 % to 50 % by weight of:
(a) 5 % to 100 % by weight of at least one ethylene/alkyl (meth)acrylate/unsaturated epoxide terpolymer (I) and of
(b) 0 to 95 % by weight of at least one polymer chosen from the group consisting of :
- polyethylenes,
- ethylene/alkyl (meth)acrylate copolymers (II),
- ethylene/alkyl (meth)acrylate/anhydride of unsaturated dicarboxylic acid terpolymers (III).

2. Composition according to Claim 1, characterised in that the terpolymer (I) comprises from 0.2 to 5 mol% of at least one unit derived from an unsaturated epoxide, from 1 to 15 mol% of at least one unit derived from an alkyl acrylate or methacrylate and has a melt index of between 1 and 50 dg/min, measured according to NFT standard 51-016 (conditions: 190°C/2.16 kg load).

3. Composition according to either of Claims 1 and 2, characterised in that the unsaturated epoxide in the terpolymer (I) is an aliphatic glycidyl ester.

4. Composition according to Claim 3, characterised in that the aliphatic glycidyl ester is glycidyl methacrylate.

5. Composition according to either of Claims 1 and 2, characterised in that the alkyl group of the alkyl acrylate or methacrylate forming part of the terpolymer (I) is linear, branched or cyclic and has up to 10 carbon atoms.

6. Composition according to Claim 5, characterised in that the alkyl acrylate is ethyl acrylate.

7. Composition according to Claim 1, characterised in that the copolymers (II) contain from 1 to 20 mol% of units derived from alkyl acrylate or methacrylate and have a melt index of between 1 and 50 dg/min, measured according to NFT standard 51-016 (conditions: 190°C/2.16 kg load).

8. Composition according to either of Claims 1 and 7, characterised in that the alkyl group of the alkyl acrylate or methacrylate forming part of the copolymers (II) is linear, branched or cyclic and has up to 10 carbon atoms.

9. Composition according to Claim 8, characterised in that the alkyl acrylate is n-butyl acrylate.

10. Composition according to Claim 1, characterised in that the terpolymers (III) contain from 0.01 to 5 mol% of units derived from anhydride of unsaturated dicarboxylic acid and from 3 to 20 mol% of units derived from an alkyl acrylate or methacrylate and have a melt index of between 1 and 50 dg/min, measured according to NFT standard 51-016 (conditions: 190°C/2.16 kg load).

11. Composition according to Claim 10, characterised in that the terpolymers (III) contain from 0.1 to 2 mol% of units derived from anhydride of unsaturated dicarboxylic acid.

12. Composition according to one of Claims 1, 10 and 11, characterised in that the anhydride of unsaturated dicarboxylic acid forming part of the terpolymers (III) is maleic anhydride.

13. Composition according to either of Claims 1 and 10, characterised in that the alkyl group of the alkyl acrylate or methacrylate forming part of the terpolymers (III) is linear, branched or cyclic and has up to 10 carbon atoms.

14. Composition according to Claim 13, characterised in that the alkyl acrylate is ethyl acrylate.

15. Articles obtained from at least one composition according to one of Claims 1 to 14.

## Patentansprüche

1. Mehrphasige thermoplastische Zusammensetzung auf der Basis eines Polyamidharzes, dadurch gekennzeichnet daß sie folgende Bestandteile enhält:
(A) 50 bis 95 Gew.-% mindestens eines Polyamidharzes und
(B) 5 bis 50 Gew.-% an:
(a) 5 bis 100 Gew.-% mindestens eines ungesättigten Ethylen/Alkyl(meth)acrylat/Epoxid-Terpolymeren (I) und
(b) 0 bis 95 Gew.-% eines aus folgender Gruppe ausgewählten Polymeren:
- Polyethylene,
- Ethylen/Alkyl(meth)acrylat-Copolymere (II) und
- Ethylen/Alkyl(meth)acrylat/ungesättigtes Dicarbonsäureanhydrid-Terpolymere (III).

2. Zusammensetzung nach Anspruch 1, dadurch gekennzeichnet; daß das Terpolymere (I) 0,2 bis 5 Mol-% mindestens einer von einem ungesättigten Epoxid abgeleiteten Struktureinheit und 1 bis 15 Mol-% mindestens einer von einem Alkylacrylat oder -methacrylat abgeleiteten Struktureinheit umfaßt und einen Schmelzindex von 1 bis 50 dg/min, gemessen gemäß der Norm NFT 51-016 (Bedingungen: 190°C/Last 2,16 kg), aufweist.

3. Zusammensetzung nach einem der Ansprüche 1 und 2, dadurch gekennzeichnet, daß es sich beim ungesättigten Epoxid im Terpolymeren (I) um einen aliphatischen Glycidylester handelt.

4. Zusammensetzung nach Anspruch 3, dadurch gekennzeichnet, daß es sich beim aliphatischen Glycidylester um Glycidylmethacrylat handelt.

5. Zusammensetzung nach einem der Ansprüche 1 und 2, dadurch gekennzeichnet, daß die Alkylgruppe des Alkylacrylats oder -methacrylats im Terpolymeren (I) linear, verzweigt oder cyclisch ist und bis zu 10 Kohlenstoffatome aufweist.

6. Zusammensetzung nach Anspruch 5, dadurch gekennzeichnet, daß es sich beim Alkylacrylat um Ethylacrylat handelt.

7. Zusammensetzung nach Anspruch 1, dadurch gekennzeichnet, daß die Copolymeren (II) 1 bis 20 Mol-% an von Alkylacrylat oder -methacrylat abgeleiteten Struktureinheiten umfassen und einen Schmelzindex von 1 bis 50 dg/min, gemessen gemäß der Norm NFT 51-016 (Bedingungen: 190°C/Last 2,16 kg), aufweisen.

8. Zusammensetzung nach einem der Ansprüche 1 und 7, dadurch gekennzeichnet, daß die Alkylgruppe des Alkylacrylats oder -methacrylats in den Copolymeren (II) linear, verzweigt oder cyclisch ist und bis zu 10 Kohlenstoffatome aufweist.

9. Zusammensetzung nach Anspruch 8, dadurch gekennzeichnet, daß es sich beim Alkylacrylat um n-Butylacrylat handelt.

10. Zusammensetzung nach Anspruch 1, dadurch gekennzeichnet, daß die Terpolymeren (III) 0,01 bis 5 Mol-% an von dem Anhydrid einer ungesättigten Dicarbonsäure abgeleiteten Struktureinheiten und 3 bis 20 Mol-% an von einem Alkylacrylat oder -methacrylat abgeleiteten Struktureinheiten aufweisen und einen Schmelzindex von 1 bis 50 dg/min, gemessen gemäß der Norm NFT-51-016, (Bedingungen: 190°C/Last 2,16 kg) besitzen.

11. Zusammensetzung nach Anspruch 10, dadurch gekennzeichnet, daß die Terpolymeren (III) 0,1 bis 2 Mol-% an von einem Anhydrid einer ungesättigten Dicarbonsäure abgeleiteten Struktureinheiten enthalten.

12. Zusammensetzung nach einem der Ansprüche 1, 10 und 11, dadurch gekennzeichnet, daß es sich beim Anhydrid einer ungesättigten Dicarbonsäure in den Terpolymeren (III) um Maleinsäureanhydrid handelt.

13. Zusammensetzung nach einem der Ansprüche 1 und 10, dadurch gekennzeichnet, daß die Alkylgruppe des Alkylacrylats oder -methacrylats in den Terpolymeren (III) linear, verzweigt oder cyclisch ist und bis zu 10 Kohlenstoffatome aufweist.

14. Zusammensetzung nach Anspruch 13, dadurch gekennzeichnet, daß es sich beim Alkylacrylat um Ethylacrylat handelt.

15. Gegenstände, erhalten aus einer Zusammensetzung gemäß einem der Ansprüche 1 bis 14.
